# EUROPÄISCHE PATENTANMELDUNG

(11) **EP 4 335 274 A1**
(43) Veröffentlichungstag der Anmeldung: **13.03.2024**
(21) Anmeldenummer: 23195278.9
(22) Anmeldetag: 05.09.2023
(51) Int. Cl.: A01C 7/12

(54) **DOSIEREINRICHTUNG**

(30) Priorität: 06.09.2022 DE 102022122532
(71) Anmelder: Lemken GmbH & Co KG, 46519 Alpen (DE)
(72) Erfinder: van Kann, Andreas, 53949 Dahlem (DE)

(57) **Zusammenfassung**

Die vorliegende Erfindung betrifft eine Dosiereinrichtung (20) zum Dosieren von rieselfähigem Schüttgut (36) aus einem Behälter (61) mit einem einen Zulauf (32) und einen Dosierabgang (33) aufweisenden Förderkanal (30), welcher ein zwischen dem Zulauf (32) und dem Dosierabgang (33) angeordnetes, ein Särad (21) der Dosiereinrichtung (20) abschnittsweise umgreifendes Bodensegment (27) umfasst, wobei dem Bodensegment (27) ein Leitelement (28) nachgeordnet ist, wobei das Leitelement (28) auf seiner gutfördernden Oberfläche (37) mit zumindest einer in Längsrichtung (x) des Leitelementes (28) verlaufenden Profilierung (39) versehen ist, die durch ihre Formgebung das Schüttgut (36) im mittleren Bereich des Leitelementes (28) zusammenführt.

## Beschreibung

Die vorliegende Erfindung betrifft eine Dosiereinrichtung zum Dosieren von rieselfähigem Schüttgut aus einem Behälter gemäß dem Oberbegriff des Anspruches 1. Weiterhin ist eine landwirtschaftliche Maschine, insbesondere eine mechanische Drillmaschine, gemäß Anspruch 16 Gegenstand der vorliegenden Erfindung.

Beim Einsatz einer landwirtschaftlichen Maschine mit Dosiereinrichtungen, insbesondere einer mechanischen Drillmaschine, ist eine konstant gleichmäßige Längsverteilung des Schüttgutes, wie Saatgut oder Dünger, eine wesentliche Zielstellung. Darunter wird ein in Fahrtrichtung möglichst gleichbleibender Kornabstand verstanden, welcher keine größeren Lücken zwischen Körnern oder Ansammlungen von Körnern durch Mehrfachausbringung aufweist.

Eine Dosiereinrichtung sowie eine landwirtschaftliche Maschine der eingangs genannten Art sind aus der EP 2 862 430 B1 bekannt. Darin ist eine Dosiereinrichtung zum Dosieren von rieselfähigem Schüttgut aus einem Behälter mit einem einen Zulauf und einen Dosierabgang aufweisenden Förderkanal bekannt. Über den Zulauf wird Schüttgut aus einem Schüttgutbehälter zugeführt und gelangt zu einem Särad. Der Förderkanal weist eine zwischen dem Zulauf und dem Dosierabgang angeordnete, das Särad abschnittsweise umgreifendes Bodensegment auf. Über das Bodensegment gelangt von dem Bodensegment kommendes Schüttgut zum Dosierabgang des Förderkanals.

Das Schüttgut gelangt dabei nach dem Dosiervorgang durch das Särad im freien Fall in den Förderkanal, wo das Schüttgut unkontrolliert auf den Förderkanal begrenzende Wandabschnitte prallt. Die Wandabschnitte des Förderkanals entsprechen einer schiefen Ebene, auf der das vereinzelte Schüttgut unkontrolliert aufprallt und dabei eine Ablenkung unterschiedlicher Intensität in verschiedene Richtungen erfährt. Dies hat zur Folge, dass einzelne Schüttgutpartikel mit unterschiedlicher Geschwindigkeit den Förderkanal und nachfolgende Komponenten der landwirtschaftlichen Maschine passieren, bevor diese in die Saatrille gelangen. Dabei können schnellere Schüttgutpartikel langsamere Schüttgutpartikel einholen und werden unter Umständen gemeinsam an einer Stelle oder in zu geringem Abstand zueinander abgelegt. Der Genauigkeitsverlust ist doppelt zu werten, da gemeinsam abgelegte Schüttgutpartikel an anderer Stelle eine entsprechend größere Lücke hinterlassen.

Ausgehend vom vorstehend genannten Stand der Technik liegt der Erfindung die Aufgabe zugrunde, eine Dosiereinrichtung sowie eine landwirtschaftliche Maschine der eingangs genannten Art weiterzubilden, welche die Nachteile des Standes der Technik vermeidet, insbesondere eine verbesserte Förderung im Förderkanal ermöglicht.

Diese Aufgabe wird durch eine Dosiereinrichtung mit den Merkmalen des unabhängigen Patentanspruchs 1 sowie eine landwirtschaftliche Maschine mit den Merkmalen des nebengeordneten Patentanspruchs 16 gelöst. Vorteilhafte Ausführungsformen und Weiterbildungen sind den hiervon abhängigen Ansprüchen zu entnehmen.

Gemäß dem Anspruch 1 wird eine Dosiereinrichtung zum Dosieren von rieselfähigem Schüttgut aus einem Behälter mit einem einen Zulauf und einen Dosierabgang aufweisenden Förderkanal vorgeschlagen. Der Förderkanal umfasst eine zwischen dem Zulauf und dem Dosierabgang angeordnete, ein Särad der Dosiereinrichtung abschnittsweise umgreifendes Bodensegment. Erfindungsgemäß ist vorgesehen, dass dem Bodensegment ein Leitelement nachgeordnet ist, wobei das Leitelement auf seiner gutfördernden Oberfläche mit zumindest einer in Längsrichtung des Leitelementes verlaufenden Profilierung versehen ist, die durch ihre Formgebung das Schüttgut im mittleren Bereich des Leitelementes zusammenführt.

Wesentlich ist die Überlegung, dass das die einzelnen Schüttgutpartikel nach dem Überkehren über das Bodensegment so wenig potenzielle Energie wie möglich in kinetische Energie überführen, bevor sie auf ein leitendes Element, hier zunächst das Leitelement, treffen. Indem die gutfördernde Oberfläche des Leitelementes mit einer geometrisch zentrierenden Profilierung ausgeführt ist, lassen sich die einzelnen Schüttgutpartikel frühzeitig nach dem Dosiervorgang, d.h. unmittelbar nach dem Übergang von dem Bodensegment auf die gutfördernde Oberfläche des Leitelementes, durch die Profilierung geregelt in einer idealisierten Linie ableiten.

Das Bodensegment weist eine konvexe, dem Särad zugewandte Oberfläche auf, die das Särad abschnittsweise umgreift. Das Bodensegment kann um eine zum Särad achsparallele Schwenkachse schwenkbar sein, um das Bodensegment in eine zum Särad beabstandete Position zu verschwenken.

Insbesondere kann die Profilierung einen von ihrem dem Bodensegment zugewandten Ende ausgehende, sich in Längsrichtung kontinuierlich verändernden Tiefenverlauf aufweisen, welcher bis zum freien Ende des Leitelementes zunimmt. Im Querschnitt des Leitelementes kann sich zumindest eine im Wesentlichen V-förmige oder bogenförmige Profilierung ausbilden. Dabei kann eine dem Bodensegment zugewandte Vorderkante des Leitelementes zunächst gerade verlaufen, bevor die Tiefe der Profilierung in Längsrichtung kontinuierlich zunimmt.

Bevorzugt kann die Profilierung als zumindest eine sich in Längsrichtung des Leitelementes erstreckende rinnenförmige Kontur mit einem Bereich maximaler Tiefe ausgebildet sein. Die Profilierung weist, im Querschnitt gesehen, an beliebiger Stelle mindestens ein Maximum in der Tiefe auf. Die zumindest eine sich in Längsrichtung des Leitelementes erstreckende rinnenförmige Kontur erstreckt sich dabei im Wesentlichen über die Breite des Leitelementes.

Dabei können Seitenwände, welche die zumindest eine rinnenförmige Kontur begrenzen, eine in Längsrichtung zum freien Ende des Leitelementes hin kontinuierlich zunehmende, dem mittleren Bereich zugewandte Neigung aufweisen. Die Seitenwände beginnen mit einer geringen Neigung, wobei sie ausgehend von der Vorderkante des Leitelementes zunächst flacher und dann zunehmend steiler verlaufen, bis am freien Ende des Leitelementes die größte Steigung vorliegt.

Des Weiteren kann der Bereich maximaler Tiefe der zumindest einen rinnenförmigen Kontur, in Längsrichtung bzw. Förderrichtung des Leitelementes gesehen, einen geraden, geneigten oder mäandernden Verlauf aufweisen.

Gemäß einer bevorzugten Weiterbildung können auf der gutfördernden Oberfläche im Wesentlichen senkrecht zu dieser orientierte Leitfinnen angeordnet sein, die unter einem Winkel zur Förderrichtung geneigt auf dem Leitelementes angeordnet sind. Die Leitfinnen sind dabei dem Bereich maximaler Tiefe der zumindest einen rinnenförmigen Kontur zugeneigt. Die Leitfinnen erstrecken sich ausgehend vom sich in Längsrichtung erstreckenden Seitenrand der gutfördernden Oberfläche hin zum Bereich maximaler Tiefe. Den Leitfinnen kommt die Aufgabe zu, von dem Bodensegment herabfallende Schüttgutpartikel in Abhängigkeit von deren Größe aufzuhalten und in Richtung der Profilierung hin zum Bereich maximaler Tiefe abzulenken. Die Leitfinnen können jeweils einen einheitlichen Neigungswinkel aufweisen oder innerhalb einer Reihe hintereinander angeordneter Leitfinnen voneinander abweichende Neigungswinkel.

Hierbei sind die Leitfinnen bevorzugt zu beiden Seiten der gutfördernden Oberfläche angeordnet. Die einander gegenüberliegend angeordneten Leitfinnen weisen entsprechend gegensinnige Steigungen auf, so dass sich eine im Wesentlichen trichterförmige Anordnung ergibt. Die Leitfinnen erstrecken sich jeweils ausgehend von einer Außenlängskante des Leitelementes abschnittsweise in Richtung des mittleren Bereiches der gutfördernden Oberfläche.

Weiterhin können die Leitfinnen einen geraden Verlauf mit konstanter Höhe oder mit einer zum mittleren Bereich hin abnehmenden Höhe ausgeführt sein. Ein zum mittleren Bereich hin abnehmender Höhenverlauf ermöglicht es, dass Schüttgutpartikel über die Leitrinne hinwegrollen können, wenn der Bereich zwischen zwei benachbarten Leitfinnen überfüllt ist. Hierdurch kann einem Rückstau auf dem Leitelement begegnet werden.

Insbesondere kann das Särad der Dosiereinrichtung mehrteilig ausgeführt sein und ein Grobsärad und ein Feinsärad aufweisen.

Hierbei kann die Profilierung der gutfördernden Oberfläche als zwei separate rinnenförmige Konturen, die parallel nebeneinander verlaufen, ausgeführt sein, wobei dem Grobsärad und dem Feinsärad jeweils eine der rinnenförmigen Konturen zugeordnet sein kann, deren Breite im Wesentlichen an die Arbeitsbreite des Grobsärades und des Feinsärades angepasst ist.

Des Weiteren können die zu beiden Seiten der gutfördernden Oberfläche angeordneten Leitfinnen, bezogen auf die jeweilige rinnenförmige Kontur, unterschiedliche Neigungen in Förderrichtung aufweisen. Insbesondere die Leitfinnen, die auf der Seite des Feinsärades angeordnet sind, weisen eine größere Neigung auf, als die Leitfinnen, die auf der Seite des Grobsärades angeordnet sind. Die dem Feinsärad zugeordnete rinnenförmige Kontur der Profilierung weist wegen der geringeren Arbeitsbreite einen steileren Verlauf auf. Dies soll dem Umstand Rechnung tragen, dass Schüttgutpartikel wie Feinsaaten oftmals durch eine deutlich geringere Dämpfung verstärkt zum unkontrollierten Abprallen tendieren als Grobsaaten.

Gemäß einer Weiterbildung kann auf der gutfördernden Oberfläche zumindest ein im Wesentlichen senkrecht zu der gutfördernden Oberfläche oder unter einem Winkel zu dieser geneigt verlaufender Steg angeordnet sein, welcher sich im Wesentlichen vom dem Bodensegment zugewandten Ende des Leitelementes ausgehend bis an das freie Ende des Leitelementes erstreckt. Ein solcher Steg kann vorgesehen sein, wenn zumindest zwei Profilierungen auf der gutfördernden Oberfläche des Leitelementes vorgesehen sind. Dem Steg kann dabei die Funktion zukommen, die beiden Profilierungen voneinander zu trennen. Die Neigung des zumindest einen Steges gegenüber der rinnenförmigen Kontur quer zum Längsverlauf einer der rinnenförmigen Konturen bildet eine Hinterschneidung. Durch die sich zwischen dem Steg und der zum Steg benachbarten Wandung der rinnenförmigen Kontur ausbildende Hinterschneidung kann die rinnenförmige Kontur durch den Steg abschnittsweise überdeckt werden. Hierdurch kann einem Abprallen der Schüttgutpartikel in vertikaler Richtung begegnet werden.

Insbesondere kann der zumindest eine Steg, in Längsrichtung der gutfördernden Oberfläche gesehen, auf einer die beiden rinnenförmigen Konturen trennenden Seitenwand angeordnet sein. Insbesondere kann der Steg auf einer in Querrichtung geneigt angeordneten Seitenwand im mittleren Bereich des Leitelementes angeordnet sein. Die geneigte Seitenwand im mittleren Bereich kann einen Teil der gutfördernden Oberfläche einer der rinnenförmigen Konturen ausbilden. Insbesondere der rinnenförmigen Kontur, die dem Grobsärad zugeordnet ist. Zugleich kann diese Seitenwand eine Hinterschneidung im Bereich der weiteren parallel verlaufenden rinnenförmigen Kontur, welche dem Feinsärad zugeordnet sein kann, ausbilden.

Insbesondere kann der zumindest eine Steg vom dem Bodensegment zugewandten Ende ausgehend einen rampenförmig ansteigenden Abschnitt aufweisen, welcher, in Längsrichtung des Leitelemetes gesehen, in einen im Wesentlichen geraden Verlauf mit konstanter Höhe übergeht.

Gemäß einer bevorzugten Weiterbildung kann der Förderkanal eine zwischen dem Zulauf und dem Dosierabgang angeordnete Klappeneinheit aufweisen, umfassend das Bodensegment und eine dieser nachgeordnete, um eine Schwenkachse schwenkbare Umschaltklappe, welche in einer ersten Stellung von dem Bodensegment kommendes Schüttgut über die gutfördernde Oberfläche in den Förderkanal umlenkt und in einer zweiten Stellung einer Abdrehprobenöffnung zuführt, wobei die Umschaltklappe als das mit die Profilierung aufweisende Leitelement ausgebildet ist.

Weiterhin wird die eingangs gestellte Aufgabe durch eine landwirtschaftliche Maschine, insbesondere mechanische Drillmaschine, mit zumindest einer Dosierreihe, in der mehrere Dosiereinrichtungen nebeneinander angeordnet sind, gelöst, wobei die Dosiereinrichtungen nach einem der Ansprüche 1 bis 15 ausgebildet sind. Es darf auf alle Ausführungen zu der vorschlagsgemäßen Dosiereinrichtung verwiesen werden.

Die vorliegende Erfindung wird nachstehend anhand von in den Zeichnungen dargestellten Ausführungsbeispielen näher erläutert:

Es zeigen:
- Fig. 1: schematisch und exemplarisch ein Dosierradgehäuse einer Dosiereinrichtung gemäß dem Stand der Technik in Seitenansicht;
- Fig. 2: schematisch eine Seitenansicht einer erfindungsgemäßen Dosiereinrichtung;
- Fig. 3: schematisch eine Teilansicht der Dosiereinrichtung gemäß Fig. 2;
- Fig. 4: schematisch eine Ansicht eines Leitelementes der Dosiereinrichtung gemäß Fig. 3 von schräg hinten;
- Fig. 5: schematisch und exemplarisch eine Frontansicht des Leitelements gemäß Fig. 4;
- Fig. 6: schematisch eine perspektivische Ansicht des Leitelementes der Dosiereinrichtung gemäß Fig. 4;
- Fig. 7: schematisch eine Ansicht des Leitelementes der Dosiereinrichtung gemäß Fig. 3 in einer weiteren Ausführungsform; und
- Fig. 8: schematisch und exemplarisch eine Ansicht einer als mechanischen Drillmaschine ausgeführten landwirtschaftlichen Maschine.

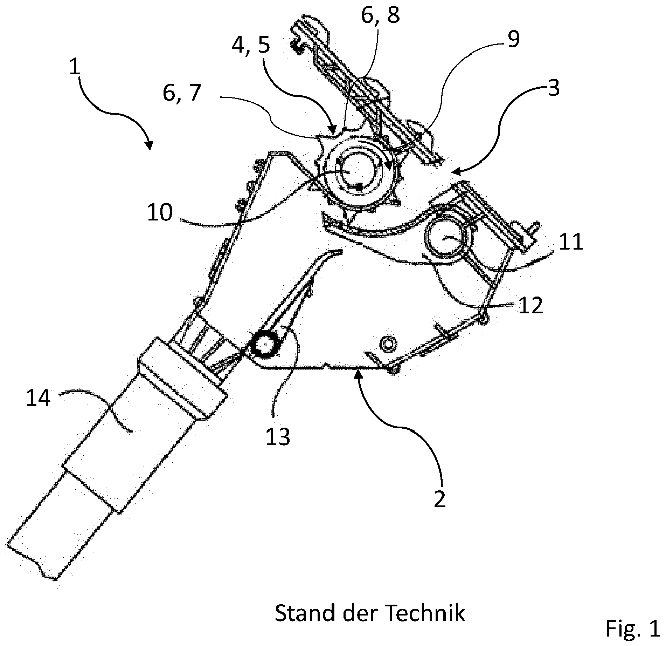

In Fig. 1 ist schematisch und exemplarisch ein Dosierradgehäuse 2 einer Dosiereinrichtung 1 gemäß dem Stand der Technik in Seitenansicht dargestellt. Das in der Fig. 1 dargestellte Dosierradgehäuse 2 wird an der Rückwand eines Saatgutbehälters einer nicht dargestellten landwirtschaftlichen Maschine befestigt. Das Saatgut fließt aufgrund von Schwerkraft durch eine Öffnung 3 in das Dosierradgehäuse 2 bis zu einem kombinierten Särad 4. Das Särad 4 weist zwei Säradteile auf, ein breiteres Grobsärad 5 mit Stegen 6 und ein schmales Feinsärad mit Nocken. Das Feinsärad ist koaxial zum Grobsärad 5 angeordnet, wobei es in der dargestellten Seitenansicht durch das Grobsärad 5 verdeckt ist. Das Grobsärad 5 weist unterschiedlich hohe Stege 6 auf. In Umfangsrichtung des Grobsärades 5 gesehen sind abwechselnd hohe Stege 7 und niedrige Stege 8 angeordnet. Die Stege 6 sind dreieckförmig ausgebildet und in Drehrichtung 9 schleppend angeordnet.

Das Grobsärad 5 und das nicht dargestellte Feinsärad sind nebeneinander im Dosierradgehäuse 2 angeordnet und auf einer Säwelle 10 gelagert. Die Säwelle 10 treibt das Grobsärad 5 und das Feinsärad an. Durch einen Bund ist das kombinierte Särad 4 zusätzlich in einer U-förmigen Ausnehmung des Dosierradgehäuses 2 geführt bzw. gelagert. Unterhalb des Särades 4 befindet sich ein Bodensegment 12 mit einer Schwenkachse 11 und eine Umschaltklappe 13, die von Säbetrieb auf Abdrehmodus umgeschaltet werden kann. Während des Säbetriebs der landwirtschaftlichen Maschine fördert das Särad 4 das Saatgut in ein Särohr 14, welches dann von dort zu nicht dargestellten Säscharen gelangt. Die Dosiereinrichtung 1 gemäß dem Stand der Technik ist in der DE 101 55 395 A1 detailliert offenbart.

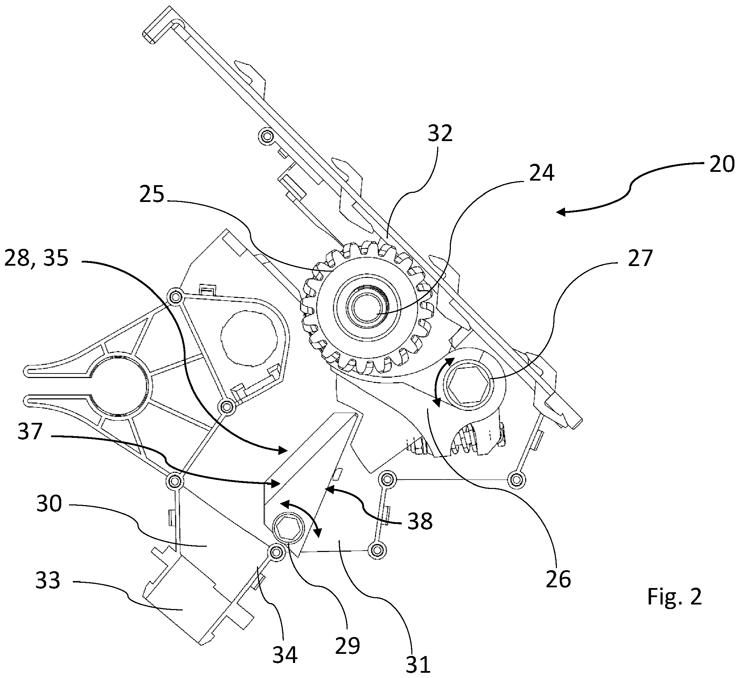

Fig. 2 zeigt schematisch eine Seitenansicht einer erfindungsgemäßen Dosiereinrichtung 20 zum Dosieren von rieselfähigem Schüttgut. Die Dosiereinrichtung 20 umfasst einen Förderkanal 30 mit einem Zulauf 32 und einem Dosierabgang 33. Über den Zulauf 32 wird aus einem Behälter kommendes Schüttgut einem Särad 21 der Dosiereinrichtung 20 zugeführt. Das Särad 21 der Dosiereinrichtung 20 ist hier und vorzugsweise mehrteilig ausgeführt. Das Särad 21 umfasst dabei ein Grobsärad 22 und ein Feinsärad 23. Das Särad 21 ist auf einer Antriebswelle 24 angeordnet. Die Antriebswelle 24 wird durch ein auf dieser drehfest angeordnetes Zahnrad 25 angetrieben. Unterhalb des Särades 21 befindet sich ein Bodensegment 26. Das Bodensegment 26 kann an einer Schwenkachse 27 angeordnet sein, um welche das Bodensegment 26 verschwenkbar ist. Weiterhin ist ein Leitelement 28 vorgesehen, das dem Bodensegment 26 nachgeordnet ist. Das Leitelement 28 ist dazu eingerichtet, von dem Bodensegment 26 kommendes Schüttgut zu zentrieren und zu leiten, bevor es auf den Förderkanal 30 in diesem Bereich begrenzende Wandungen 34 trifft. Das Leitelement 28 kann als Umschaltklappe 35 ausgeführt sein, die um eine Schwenkachse 29 ebenfalls schwenkbar ist. Das um die Schwenkachse 27 schwenkbare Bodensegment 26 und die als Leitelement 28 ausgeführte Umschaltklappe 35 können von einem Säbetrieb in einen Abdrehmodus umgeschaltet werden. In einer ersten Stellung lenkt die Umschaltklappe 35 von dem Bodensegment 26 kommendes Schüttgut 36 über eine gutfördernde Oberfläche 37 in den Förderkanal 30 der Dosiereinrichtung 20 um. In einer zweiten Stellung führt die Umschaltklappe 35 vom Särad 21 kommendes Schüttgut 36 einer Abdrehprobenöffnung 31 zu. In Fig. 2 befindet sich das Bodensegment 26 in einer Position, die dem Abdrehmodus entspricht. Die Umschaltklappe 35 ist in ihrer im Säbetrieb befindlichen Position dargestellt. Im Abdrehmodus befindet sich Umschaltklappe 35 in einer Position, in welcher der Förderkanal 30 verschlossen ist. Dabei wird vom Särad 21 kommendes Schüttgut 36 über eine im Wesentlichen eben ausgeführte Ablenkfläche 38 in Richtung der Abdrehprobenöffnung 31 abgelenkt.

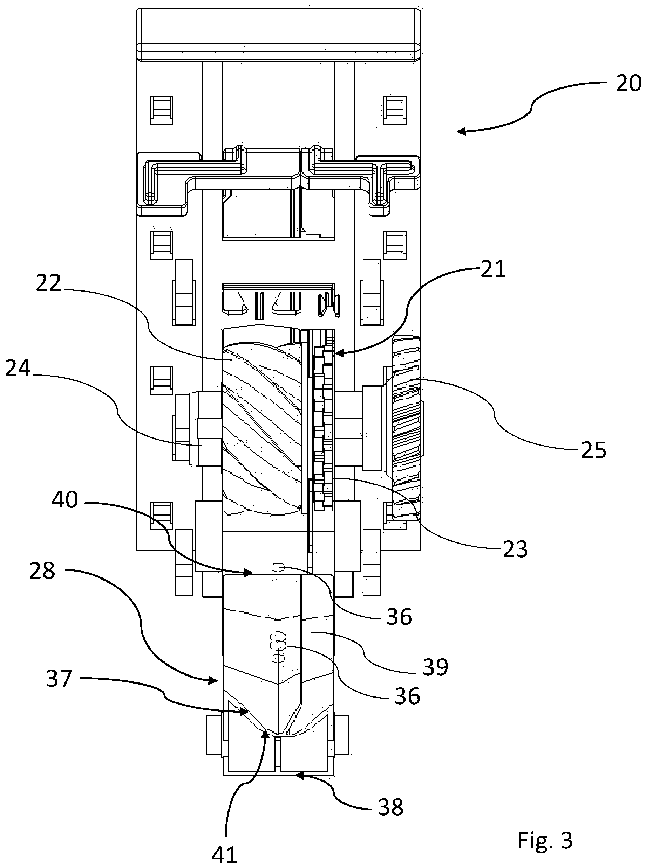

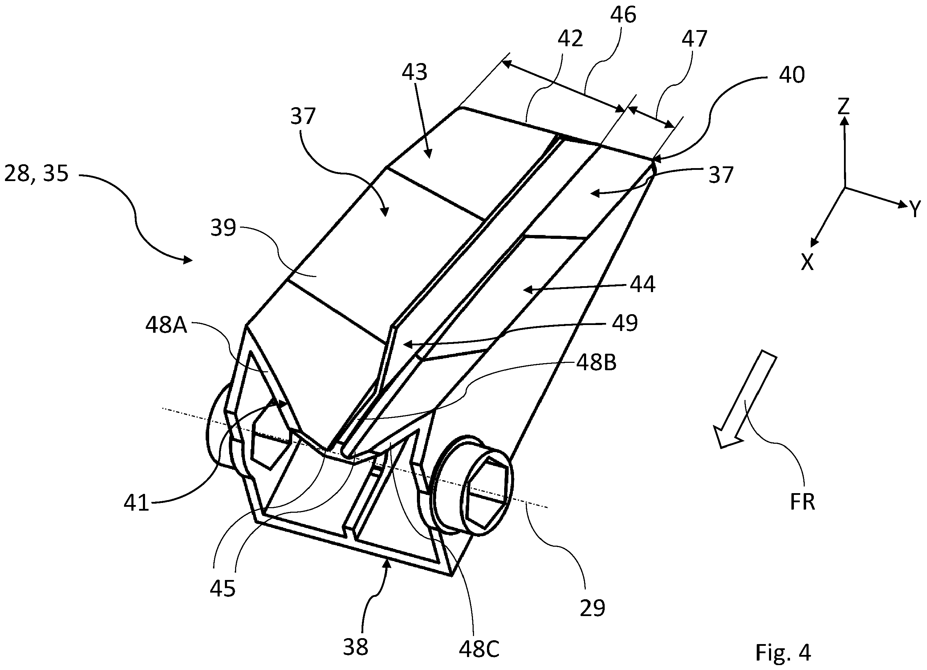

Fig. 3 zeigt schematisch eine Teilansicht einer erfindungsgemäßen Dosiereinrichtung 20. Die Umschaltklappe 35 ist als Profilbauteil ausgeführt, welches im Querschnitt aus einem geschlossenen Hohlprofil besteht. Die Umschaltklappe 35 ist auf ihrer gutfördernden Oberfläche 37 mit zumindest einer in Längsrichtung der Umschaltklappe 35 verlaufenden Profilierung 39 versehen. Diese Profilierung 39 wird nachstehend anhand der Fig. 4 bis 7 näher beschrieben.

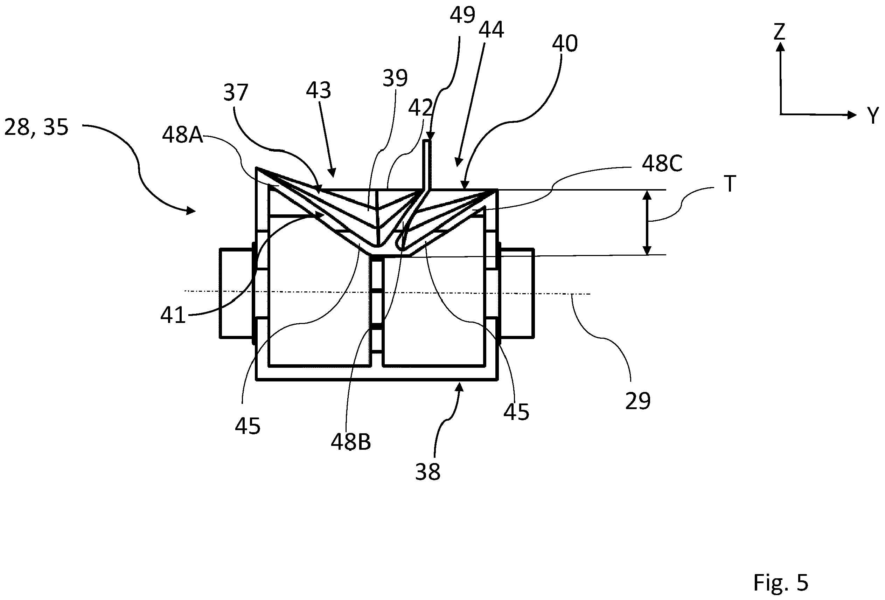

Die Darstellung in Fig. 4 zeigt schematisch eine Ansicht der Umschaltklappe 35 der Dosiereinrichtung gemäß Fig. 3 von schräg hinten. Die Profilierung 39 weist einen von ihrem dem Bodensegment 26 zugewandten Ende 40 ausgehenden, sich in Längsrichtung X kontinuierlich verändernden Tiefenverlauf auf, welcher bis zum freien Ende 41, d.h. dem dem Bodensegment 26 abgewandten Ende 41, des Leitelementes 28 bzw. der Umschaltklappe 35 zunimmt, wie aus Fig. 5 ersichtlich. Im Querschnitt des Leitelementes 28 bzw. der Umschaltklappe 35 bildet sich zumindest eine im Wesentlichen V-förmige oder bogenförmige Profilierung 39 aus. Dabei kann eine dem Bodensegment 26 zugewandte Vorderkante 42 der Umschaltklappe 35 zunächst gerade verlaufen, bevor der Tiefenverlauf der Profilierung 39 in Längsrichtung X kontinuierlich zunimmt.

Insbesondere ist die Profilierung 39 als zumindest eine sich in Längsrichtung X der Umschaltklappe 35 erstreckende rinnenförmige Kontur 43, 44 mit einem Bereich 45 maximaler Tiefe ausgebildet. Im dargestellten Ausführungsbeispiel ist die Profilierung 39 als zwei rinnenförmige Konturen ausgebildet, die in Längsrichtung X parallel nebeneinander verlaufen. Die rinnenförmigen Konturen weisen, in Querrichtung Y der Umschaltklappe 35 gesehen, unterschiedliche Breiten 46, 47 auf. Die jeweilige Breite 46, 47 der rinnenförmigen Konturen 43, 44 variiert dabei in Abhängigkeit von der Arbeitsbreite von Grobsärad 22 und Feinsärad 23. Seitenwände 48A, 48B, 48C, welche die zumindest eine rinnenförmige Kontur 43, 44 begrenzen, weisen von ihrem dem Bodensegment 26 zugewandten Ende 40 ausgehend eine in Längsrichtung X zum freien Ende 41 der Umschaltklappe 35 hin kontinuierlich zunehmende Neigung auf. Die Seitenwände 48A, 48B, 48C beginnen mit einer geringen Neigung quer zur Längsrichtung X, d.h. die Seitenwände 48A, 48B, 48C verlaufen ausgehend von der Vorderkante 42 der Umschaltklappe 35 flacher und werden dann zunehmend steiler. Die Seitenwände 48A und 48B begrenzen die rinnenförmige Kontur 43, welche dem Grobsärad 22 zugeordnet ist. Die Seitenwände 48B und 48C begrenzen die rinnenförmige Kontur 44, welche dem Feinsärad 23 zugeordnet ist.

Der Bereich 45 maximaler Tiefe der zumindest einen rinnenförmigen Kontur 43, 44 weist in der dargestellten Ausführungsform einen geraden Verlauf auf. Der Verlauf kann in Längsrichtung X gesehen auch geneigt oder mäandernd ausgeführt sein.

Fig. 5 zeigt schematisch und exemplarisch eine Frontansicht des Leitelements 28 gemäß Fig. 4. Die nebeneinander verlaufenden rinnenförmigen Konturen 43, 44 sind durch einen Steg 49 voneinander getrennt. Der auf der gutfördernden Oberfläche 37, hier und vorzugsweise auf der im mittleren Bereich befindlichen Seitenwand 48B, angeordnete Steg 49 verläuft im Wesentlichen senkrecht zu der gutfördernden Oberfläche 37 oder unter einem Winkel geneigt. Der Steg 49 erstreckt sich im Wesentlichen vom dem Bodensegment 26 zugewandten Ende 40 des Leitelementes 28 ausgehend bis an das freien Ende 41 des Leitelementes 28.

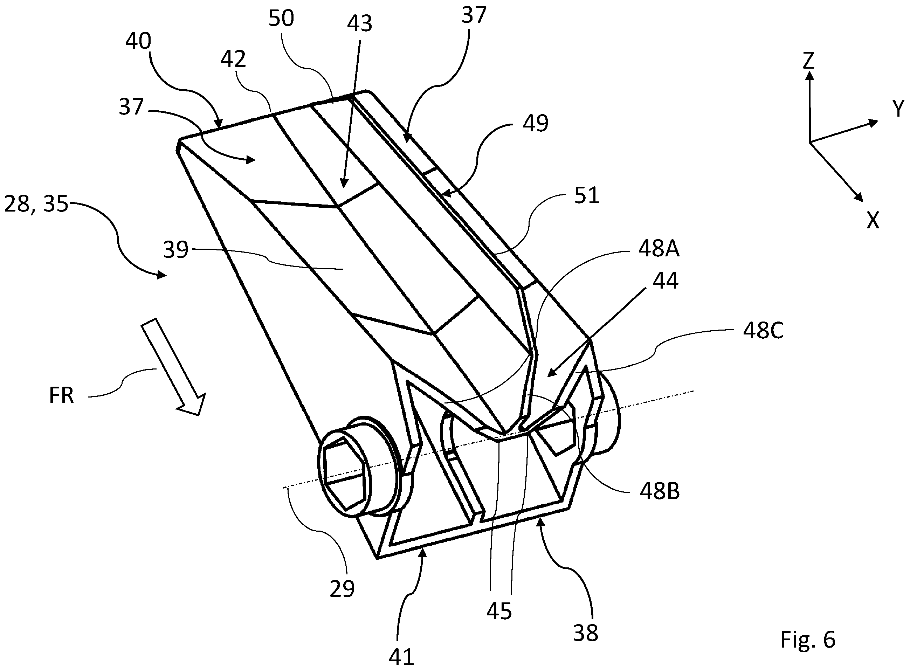

Der Steg 49 weist ausgehend von dem dem Bodensegment 26 zugewandten Ende 40 einen rampenförmig ansteigenden Abschnitt 50 auf, welcher in einen im Wesentlichen geraden Verlauf 51 mit konstanter Höhe übergeht, wie aus Fig. 6 ersichtlich. Die mittlere Seitenwand 48B, die in Querrichtung y geneigt ist, bildet einen Teil der gutfördernden Oberfläche 37 der rinnenförmigen Kontur 43 aus. Aufgrund ihrer Neigung in Querrichtung y überlappt die mittlere Seitenwand 48B die parallel verlaufende rinnenförmige Kontur 44, sodass sich eine Hinterschneidung ausbildet.

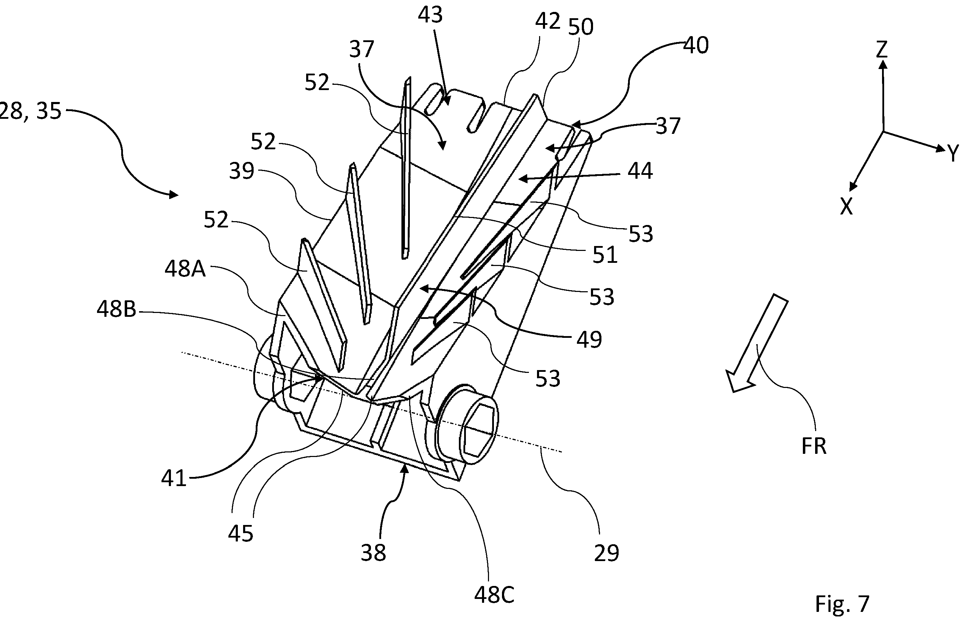

In Fig. 7 ist schematisch eine Ansicht des Leitelementes der Dosiereinrichtung gemäß Fig. 3 in einer weiteren Ausführungsform dargestellt. Auf der gutfördernden Oberfläche 37 sind im Wesentlichen senkrecht zu dieser orientierte Leitfinnen 52, 53 angeordnet. Die Leitfinnen 52, 53 sind unter einem Winkel zur Förderrichtung FR geneigt auf dem Leitelement 28 angeordnet. Die Leitfinnen 52 sind auf der Seitenwand 48A der rinnenförmigen Kontur 43 angeordnet. Die Leitfinnen 53 sind auf der gegenüberliegenden Seitenwand 48C der rinnenförmigen Kontur 44 angeordnet. Die Leitfinnen 52, 53 sind, ausgehend vom äußeren Randbereich der Seitenwände 48A bzw. 48C in Richtung des Bereichs 45 maximaler Tiefe geneigt.

Die zu beiden Seiten der gutfördernden Oberfläche 37 angeordneten Leitfinnen 52, 53 weisen, bezogen auf die jeweilige rinnenförmige Kontur 43, 44, unterschiedliche Neigungen in Förderrichtung FR auf. Dabei weisen die auf der Seitenwand 48A angeordneten Leitfinnen 52 eine geringere Neigung auf als die Leitfinnen 53 auf der Seitenwand 48C.

Die Leitfinnen 52, 53 können einen geraden Verlauf mit konstanter Höhe oder mit einer zum mittleren Bereich hin abnehmenden Höhe ausgeführt sein. Letztere Ausführung der Leitfinnen 52, 53 kann dazu dienen, dass das Schüttgut über die Leitfinnen 52, 53 hinwegrollen kann, wenn der Bereich zwischen benachbarten Leitfinnen 52 bzw. 53 mit Schüttgut gefüllt ist. Auf diese Weise kann ein Rückstau auf dem Leitelement 28 vermieden werden.

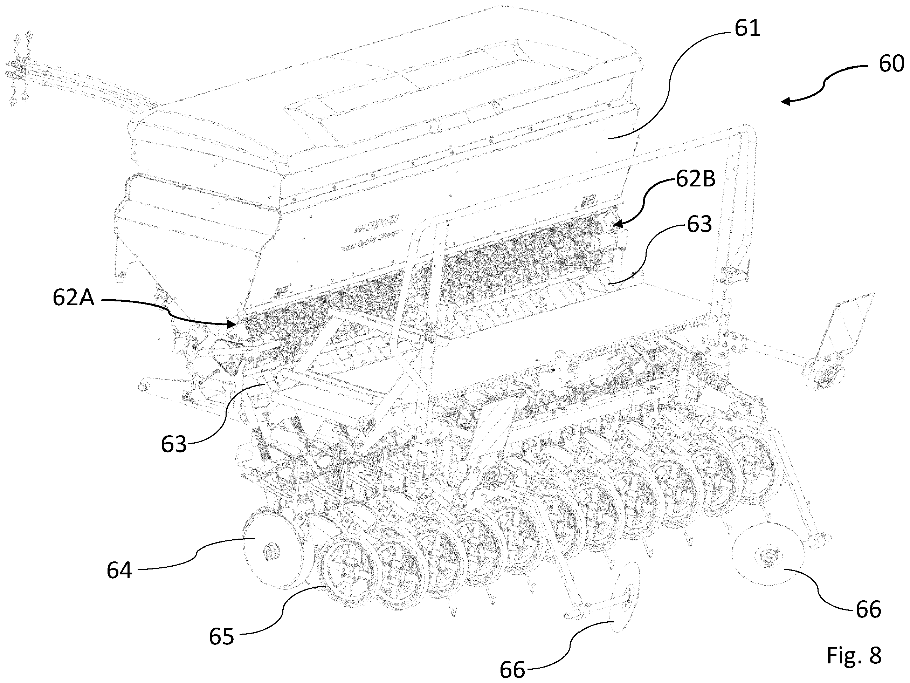

In Fig. 8 ist schematisch und exemplarisch eine Ansicht einer als mechanischen Drillmaschine 60 ausgeführten landwirtschaftlichen Maschine von schräg hinten dargestellt. Die Drillmaschine 60 weist einen mit rieselfähigem Schüttgut 36, wie Dünger oder Saatgut, befüllbaren Behälter 61 auf. Das Schüttgut 36 gelangt zu in zwei Dosierreihen 62A, 62B nebeneinander angeordneten erfindungsgemäßen Dosiereinrichtungen 20, welche das Saatgut in ein der jeweiligen Dosiereinrichtung 20 nachgeordnetes Särohr 63 fördern. Das Schüttgut 36 gelangt von der jeweiligen Dosiereinrichtung 20 durch den Förderkanal 30 zu dem Dosierabgang 33, an den das Särohr 63 angeschlossen ist. Von den Särohren 63 gelangt das Saatgut weiter zu Säscharen 64. Hinter den Säscharen 64 sind Tiefenführungsrollen 65 sowie zwei optionale Hohlscheiben 66 zur Vorlaufmarkierung angeordnet.

**Bezugszeichenliste**

| | | |
|---|---|---|
| 1 | Dosiereinrichtung | 38 Ablenkfläche |
| 2 | Dosierradgehäuse | 39 Profilierung |
| 3 | Öffnung | 40 Ende von 35 |
| 4 | Särad | 41 Ende von 35 |
| 5 | Grobsärad | 42 Vorderkante von 35 |
| 6 | Steg | 43 Rinnenförmige Kontur |
| 7 | Steg | 44 Rinnenförmige Kontur |
| 8 | Steg | 45 Bereich maximaler Tiefe von 35 |
| 9 | Drehrichtung | 46 Breite von 43 |
| 10 | Säwelle | 47 Breite von 44 |
| 11 | Schwenkachse | 48A Seitenwand |
| 12 | Bodensegment | 48B Seitenwand |
| 13 | Entleerungsklappe | 48C Seitenwand |
| 14 | Särohr | 49 Steg |
| | | 50 Abschnitt |
| 20 | Dosiereinrichtung | 51 Verlauf |
| 21 | Särad | 53 Leitfinne |
| 22 | Grobsärad | 54 Leitfinne |
| 23 | Feinsärad | |
| 24 | Antriebswelle | 60 Drillmaschine |
| 25 | Zahnrad | 61 Behälter |
| 26 | Bodensegment | 62A Dosierreihe |
| 27 | Schwenkachse | 62B Dosierreihe |
| 28 | Leitelement | 63 Särohr |
| 29 | Schwenkachse | 64 Säschar |
| 30 | Förderkanal | 65 Tiefenführungsrolle |
| 31 | Abdrehprobenöffnung | 66 Hohlscheibe |
| 32 | Zulauf | |
| 33 | Dosierabgang | FR Förderrichtung |
| 34 | Wandung | x Längsrichtung |
| 35 | Umschaltklappe | y Querrichtung |
| 36 | Schüttgut | z Hochrichtung |
| 37 | Gutfördernde Oberfläche | |

## Patentansprüche

1. Dosiereinrichtung (20) zum Dosieren von rieselfähigem Schüttgut (36) aus einem Behälter (61) mit einem einen Zulauf (32) und einen Dosierabgang (33) aufweisenden Förderkanal (30), welcher ein zwischen dem Zulauf (32) und dem Dosierabgang (33) angeordnete, ein Särad (21) der Dosiereinrichtung (20) abschnittsweise umgreifendes Bodensegment (27) umfasst, **dadurch gekennzeichnet, dass** dem Bodensegment (27) ein Leitelement (28) nachgeordnet ist, wobei das Leitelement (28) auf seiner gutfördernden Oberfläche (37) mit zumindest einer in Längsrichtung (x) des Leitelementes (28) verlaufenden Profilierung (39) versehen ist, die durch ihre Formgebung das Schüttgut (36) im mittleren Bereich des Leitelementes (28) zusammenführt.

2. Dosiereinrichtung (20) nach Anspruch 1, **dadurch gekennzeichnet, dass** die Profilierung (39) einen von ihrem dem Bodensegment (27) zugewandten Ende (40) ausgehende, sich in Längsrichtung (x) kontinuierlich verändernden Tiefenverlauf aufweist, welcher bis zum freien Ende (41) des Leitelementes (28) zunimmt.

3. Dosiereinrichtung (20) nach Anspruch 1 oder 2, **dadurch gekennzeichnet, dass** die Profilierung (39) als zumindest eine sich in Längsrichtung (x) des Leitelementes (28) erstreckende rinnenförmige Kontur (43, 44) mit einem Bereich maximaler Tiefe (45) ausgebildet ist.

4. Dosiereinrichtung (20) nach Anspruch 3, **dadurch gekennzeichnet, dass** Seitenwände (48A, 48B, 48C), welche die zumindest eine rinnenförmige Kontur (43, 44) begrenzen, eine in Längsrichtung (x) zum freien Ende (41) des Leitelementes (28) hin kontinuierlich zunehmende, dem mittleren Bereich zugewandte Neigung aufweisen.

5. Dosiereinrichtung (20) nach Anspruch 3 oder 4, **dadurch gekennzeichnet, dass** der Bereich maximaler Tiefe (45) der zumindest einen rinnenförmigen Kontur (43, 44) einen geraden, geneigten oder mäandernden Verlauf aufweist.

6. Dosiereinrichtung (20) nach einem der Ansprüche 1 bis 5, **dadurch gekennzeichnet, dass** auf der gutfördernden Oberfläche (37) im Wesentlichen senkrecht zu dieser orientierte Leitfinnen (52, 53) angeordnet sind, die unter einem Winkel zur Förderrichtung (FR) geneigt auf dem des Leitelement (28) angeordnet sind.

7. Dosiereinrichtung (20) nach Anspruch 6, **dadurch gekennzeichnet, dass** die Leitfinnen (52, 53) zu beiden Seiten der gutfördernden Oberfläche (37) angeordnet sind.

8. Dosiereinrichtung (20) nach Anspruch 6 oder 7, **dadurch gekennzeichnet, dass** die Leitfinnen (52, 53) einen geraden Verlauf mit konstanter Höhe oder mit einer zum mittleren Bereich hin abnehmenden Höhe ausgeführt sind.

9. Dosiereinrichtung (20) nach einem der Ansprüche 1 bis 7, **dadurch gekennzeichnet, dass** das Särad der Dosiereinrichtung (20) mehrteilig ausgeführt ist und ein Grobsärad (22) und ein Feinsärad (23) aufweist.

10. Dosiereinrichtung (20) nach Anspruch 8, **dadurch gekennzeichnet, dass** die Profilierung (39) der gutfördernden Oberfläche (37) als zwei separate rinnenförmige Konturen (43, 44), die parallel nebeneinander verlaufen, ausgeführt ist, und dass dem Grobsärad (22) und dem Feinsärad (23) jeweils eine der rinnenförmigen Konturen (43, 44) zugeordnet ist, deren Breite (46, 47) im Wesentlichen an die Arbeitsbreite des Grobsärades (22) und des Feinsärades (23) angepasst ist.

11. Dosiereinrichtung (20) nach Anspruch 10, **dadurch gekennzeichnet, dass** die zu beiden Seiten der gutfördernden Oberfläche (37) angeordneten Leitfinnen (52, 53), bezogen auf die jeweilige rinnenförmige Kontur (43, 44), unterschiedliche Neigungen in Förderrichtung (FR) aufweisen.

12. Dosiereinrichtung (20) nach einem der vorangehenden Ansprüche, **dadurch gekennzeichnet, dass** auf der gutfördernden Oberfläche (37) zumindest ein im Wesentlichen senkrecht zu der gutfördernden Oberfläche (37) oder zu dieser geneigt verlaufender Steg (49) angeordnet ist, welcher sich im Wesentlichen vom dem Bodensegment (27) zugewandten Ende (40) des Leitelementes (28) ausgehend bis an das freien Ende (41) des Leitelementes (28) erstreckt.

13. Dosiereinrichtung (20) nach Anspruch 12, **dadurch gekennzeichnet, dass** der zumindest eine Steg (49), in Längsrichtung (x) der gutfördernden Oberfläche (37) gesehen, die auf einer die beiden rinnenförmigen Konturen (43, 44) trennenden Seitenwand (48B) angeordnet ist.

14. Dosiereinrichtung (20) nach Anspruch 12 oder 13, **dadurch gekennzeichnet, dass** der zumindest eine Steg (49) vom dem Bodensegment (27) zugewandten Ende (40) ausgehend einen rampenförmig ansteigenden Abschnitt (50) aufweist, welcher in einen im Wesentlichen geraden Verlauf (51) mit konstanter Höhe übergeht.

15. Dosiereinrichtung (20) nach einem der vorangehenden Ansprüche, **dadurch gekennzeichnet, dass** der Förderkanal (30) eine zwischen dem Zulauf (32) und dem Dosierabgang (32) angeordnete Klappeneinheit aufweist, umfassend das Bodensegment (27) und eine dieser nachgeordnete, um eine Schwenkachse (29) schwenkbare Umschaltklappe (35), welche in einer ersten Stellung von dem Bodensegment (27) kommendes Schüttgut (36) über die gutfördernde Oberfläche (37) in den Förderkanal (30) umlenkt und in einer zweiten Stellung einer Abdrehprobenöffnung (31) zuführt, wobei die Umschaltklappe (35) als das Leitelement (28) ausgebildet ist.

16. Landwirtschaftliche Maschine (60), insbesondere Drillmaschine, mit zumindest einer Dosierreihe (62A, 62B), in der mehrere Dosiereinrichtungen (20) nebeneinander angeordnet sind, **dadurch gekennzeichnet, dass** die Dosiereinrichtungen (20) nach einem der Ansprüche 1 bis 15 ausgebildet sind.
